Europäisches Patentamt

(19) European Patent Office

Office européen des brevets

(11) Publication number: **0 251 798 B1**

# EUROPEAN PATENT SPECIFICATION

(45) Date of publication of patent specification :
12.06.91 Bulletin 91/24

(51) Int. Cl.$^5$: **A23L 1/307**, A23L 1/09,
C07H 3/06

(21) Application number: 87305867.1

(22) Date of filing : 02.07.87

(54) Low calorie bulking agent, method for production thereof, use thereof, and nutrient or stimulant containing the low calorie bulking agent.

The file contains technical information
submitted after the application was filed and
not included in this specification

(30) Priority : 03.07.86 SE 8602971

(43) Date of publication of application :
07.01.88 Bulletin 88/01

(45) Publication of the grant of the patent :
12.06.91 Bulletin 91/24

(84) Designated Contracting States :
AT BE CH DE ES FR GB GR IT LI NL SE

(56) References cited :
WO-A-82/03329
US-A- 3 880 742
US-A- 4 021 543
US-A- 4 024 290
US-A- 4 459 316
TECHNICAL QUARTERLY, vol. 9, no. 3, 1972,
pages 151-157; D.T. BOURNE et al. "B-Glucan
and B-Glucanase-Review"

(73) Proprietor : NOVO NORDISK A/S
Novo Allé
DK-2880 Bagsvaerd (DK)

(72) Inventor : Jensen, Villy Johannes
Skovkilden 6
DK-2880 Bagsvaerd (DK)
Inventor : Pedersen, Sven
Emil Reesensvej 9
DK-2820 Gentofte (DK)
Inventor : Olsen, Hans Aage Sejr
Hoejbjerg Vang 7
DK-2840 Holte (DK)

(74) Representative : Brown, John David et al
FORRESTER & BOEHMERT
Widenmayerstrasse 4/I
W-8000 München 22 (DE)

## Description

A prior art discussion concerning the problems in relation to and the need for low calorie bulking agents is to be found in CRC Critical Reviews in Food Science and Nutrition, May 1979, pages 401-413, Low Calorie Bulking Agents, by J.J. Beereboom et al. In this discussion it is stated that low calorie food of good quality can only be made with bulking agents having physical properties permitting replacement of the bulk and functional properties of the usual fat or carbohydrate, and also that two types of bulking agents for carbyhydrates are needed : (1) a soluble material that can replace sucrose and other simple carbohydrates in food, and (2) an insoluble material capable of replacing flour or starch. The invention is concerned with this first type of bulking agent for carbyhydrates.

Among the known low calorie bulking agents of this kind Neosugar and Polydextrose are those most used on the market, and, thus, those considered the best in regard to the critical properties which ideally should be exhibited by bulking agents of the above indicated kind.

Neosugar (GB 2.072.679, and the Journal of Nutrition, Volume 114, No. 9, Sept. 1984, pp. 1574-1581), however, is sweet which is not necessarily an advantage as it is often wanted to control the sweetness by means of an artificial sweetener, and further, Neosugar exhibits an inferior stability at low pH values, e.g. in acidic drinks like "Coca Cola". Neosugar is a sweetener comprising oligosaccharides having from 1 to 4 molecules of fructose bound to sucrose. "Coca Cola" is a registered Trade Mark.

Polydextrose (US 3766165, Food Technology, July 1981, 35 (7), 44-49 (1981)), on the other hand, has a satisfactory stability at low pH values in acid drinks, but it exhibits an acid bitter taste which is difficult to mask.

Thus, a need exists for a low calorie bulking agent that can replace sucrose and other soluble, simple carbohydrates in food, whereby this bulking agent should exhibit the following new combinations of desirable properties : a) a satisfactory taste, i.e. an almost neutral taste and at any rate not an acid, bitter taste ; and b) a satisfactory stability at low pH values.

The low calorie bulking agent used in the invention, which can replace sucrose and other soluble, simple carbohydrates in food, is characterized by the fact that the active component thereof is a glucose oligomer or a mixture of glucose oligomers, in which DP = 3 or 4, and wherein the or each oligomer exhibits one beta-1,3-glucosidic bond, all other bonds being beta-1,4-glucosidic bonds. DP is an abbreviation for degree of polymerization. Surprisingly, it has been found that the bulking agent exhibits the previously indicated new combination of advantageous properties. Also, besides the above indicated advantageous combination of taste and stability this embodiment of the bulking agent exhibits a superior body closely resembling the body of a corresponding sucrose solution. It is to be understood that the bulking agent of the invention can contain other oligomers, e.g. the pentasaccharide, and/or higher oligomers, and impurities.

US patent no. 4,459,316 describes sweetening foods with non-caloric di- or trisaccharides having L-hexose component. However, the L-hexoses do not exist in nature and cannot be assimilated by the human organism, but are also expensive.

WO 82/03329 describes glucose polymers and a method for production thereof. However, the known hydrolyzate is fundamentally different from the bulking agent according to the invention ; the known hydrolyzate is produced with starch as a starting material, whereas the bulking agent according to the invention is produced with β-glucan as a starting material.

Also, reference is made to the fact that the glucose oligomer or the mixture of glucose oligomers referred to above are known per se, reference being made to e.g. Technical Quarterly Vol. 9, No. 3 (1972), p. 151-157. US-A-3880142 discloses a malt syrup containing the glucose oligomers : because the main part of malt syrup is fully digestible carbohydrates with high calorific value, malt syrup is completely unsatisfactory as a bulking agent.

Also, there is disclosed a method for production of the bulking agent and the method is characterized by the fact that beta-glucan is hydrolysed with beta-glucanase, whereafter the beta-glucanase is inactivated, and the reaction mixture is purified and concentrated. The beta-glucan can be produced by grinding of e.g. barley or oats, standard liquefaction and saccharification by means of TERMAMYL amylase and amyloglucosidase, inactivation of the enzyme, hot centrifugation, and membrane filtration, whereby the beta-glucan is to be found in the concentrate. It is to be understood that the bulking agent, as prepared according to the above method, contains minor amounts of oligomers with DP 2 and DP $\geq$ 5, and it has been found that these minor amounts do not exhibit any harmful effect on the bulking agent according to the invention.

A preferred embodiment of the method is characterized by the fact that the purification is carried out by means of active carbon and ion exchange, and that the concentration is carried out by evaporation and spray drying. This embodiment is cheap and simple, and delivers the bulking agent in a high yield.

The invention comprises a use of the bulking agent according to the invention, i.e. in a nutrient or a stimulant, as a substitute for sucrose or other simple, soluble carbohydrate.

A preferred embodiment of the use according to the invention is characterized by the fact that the nutrient or the stimulant is a carbonated drink, an ice cream or a cookie. It has been found that the bulking agent functions very well in such nutrients or stimulants, and that the stability, especially in carbonated drinks, is excellent.

Finally the invention comprises a nutrient or a stimulant containing a bulking agent, wherein the bulking agent is the bulking agent used according to the invention. Any nutrient or stimulant, which contains sugar as sucrose or similar sugars, can be converted to a nutrient or stimulant according to the invention by complete or partial substitution of the sucrose or similar sugars with the bulking agent used according to the invention.

A preferred embodiment of the nutrient or stimulant according to the invention is characterized by the fact that the nutrient or the stimulant contains 1-50% by weight, preferably 5-25% by weight of the bulking agent calculated on the weight of the nutrient or stimulant. These intervals cover the optimal incorporated amounts of the bulking agent in the different nutrients or stimulants in regard to body, other organoleptic properties, and economy, depending on the nutrient or stimulant, e.g. a salad dressing, a marmalade, a pudding, a gelatin dessert, marzipan, a carbonated drink, an ice cream, a cookie, a cake, candies, hard candies, maple syrup, caramels, toffee, gumdrops, nougat, marshmallows, and chewing gum.

In order to demonstrate the superiority of the bulking agent used according to the invention in regard to stability in an acid environment, comparative experiments with sucrose and Neosugar were carried out in the following manner : 10% (w/w) solutions of saccharose, Neosugar, and the bulking agent according to the invention, prepared as described later in Example 1, were prepared and adjusted to different pH values and temperatures, as appears from the following tables, and after certain storage periods the percentage decomposition was measured according to the formula

$$\% \text{ decomposition at time t} = 100 - \frac{DP_2^+ \text{ at time t}}{DP_2^+ \text{ at time O}} \times 100$$

wherein $DP_2^+$ is the amount of oligomers with a DP of 2 or more. The values in the tables are the percentage decomposition, as defined above. Whenever in the following reference is made to a specific embodiment of the bulking agent according to the invention, used in a specific experiment, this embodiment is the bulking agent according to the invention, prepared as described later in Example 1.

## 30°C

|  | pH | 2 h | 6 h | 24 h |
|---|---|---|---|---|
| Sucrose | 2 | 6.4 | 15.0 | 40.3 |
|  | 3 | 0 | 3.7 | 6.7 |
|  | 4 | 0 | 0 | 0 |
|  | 5 | 0 | 0 | 0 |
|  | 6 | 0 | 0 | 0 |
|  | 7 | 0 | 0 | 0 |
| Neosugar | 2 | 10.0 | 19.0 | 48.7 |
|  | 3 | 1.5 | 3.0 | 6.4 |
|  | 4 | 0 | 0 | 0 |
|  | 5 | 0 | 0 | 0 |
|  | 6 | 0 | 0 | 0 |
|  | 7 | 0 | 0 | 0 |
| Bulking agent according to invention | 2 | 0 | 0 | 0 |
|  | 3 | 0 | 0 | 0 |
|  | 4 | 0 | 0 | 0 |
|  | 5 | 0 | 0 | 0 |
|  | 6 | 0 | 0 | 0 |
|  | 7 | 0 | 0 | 0 |

## 60°C

|            | pH | 2 h  | 5 h  | 24 h | 48 h |
|------------|----|------|------|------|------|
| Sucrose    | 2  | 86.3 | 97.2 | 100  | 100  |
|            | 3  | 18.9 | 31.8 | 53.2 | 77.2 |
|            | 4  | 4.1  | 5.8  | 7.0  | 10.8 |
|            | 5  | 0    | 0    | 0    | 1.6  |
|            | 6  | 0    | 0    | 0    | 0    |
|            | 7  | 0    | 0    | 0    | 0    |
| Neosugar   | 2  | 86.5 | 94.5 | 96.1 | 96.9 |
|            | 3  | 23.1 | 38.4 | 42.3 | 67.0 |
|            | 4  | 3.7  | 6.4  | 6.6  | 20.2 |
|            | 5  | 0    | 0    | 0    | 4.9  |
|            | 6  | 0    | 0    | 0    | 0    |
|            | 7  | 0    | 0    | 0    | 0    |
| Bulking agent according to invention | 2 | 0 | 0 | 2.4 | 4.2 |
|            | 3  | 0    | 0    | 0    | 1.3  |
|            | 4  | 0    | 0    | 0    | 0    |
|            | 5  | 0    | 0    | 0    | 0    |
|            | 6  | 0    | 0    | 0    | 0    |
|            | 7  | 0    | 0    | 0    | 0    |

Thus, it clearly appears that the bulking agent according to the invention exhibits a superior stability, especially at the low pH values.

In order to demonstrate the superiority of the bulking agent according to the invention in regard to taste in different stimulants, reference is made to the article Polydextrose in Food Technology, July 1981 (35) 7, 44-49 (1981), espcially page 45, from which it appears that Polydextrose exhibits a bitter taste, and to the following experiments with the bulking agent according to the invention, prepared as described later in Example 1.

For the sake of brevity, a sugar-free Soda Stream™ citrus soft drink concentrate will be referred to in the following as $C_1$.

A control soft drink was prepared by dilution of 22.2 g of $C_1$ with water to 200 cm³, whereafter 18 g of sucrose were added. Finally, the drink was carbonated by means of the Soda Stream™ carbonating apparatus.

A soft drink with the bulking agent according to the invention was prepared as the control soft drink, only instead of the saccharose 0.1 g of Aspartame and 4 g of the bulking agent according to the invention, prepared as described in Example 1, were added. According to a trained panel consisting of ten persons this soft drink had a taste and body as the control soft drink, i.e. a pleasant sweet taste without any bitterness whatsoever. With less than 4 g of the bulking agent according to the invention the body did not correspond to the body of the control soft drink.

A control ice cream was made up by mixing and freezing the following mixture : 15 g of sucrose, 100 g of whipped cream, 1 egg, and 1 g of vanilla sugar. An ice cream with the bulking agent according to the invention was prepared as the control ice cream, only instead of the sucrose 15 g of the bulking agent according to the invention, prepared as described in Example 1, and 0.0833 g of Aspartame were added. According to a trained panel consisting of ten persons this ice cream had a pleasant taste corresponding to the taste of the control ice cream, i.e. without any bitterness whatsoever.

Thus, it clearly appears that the bulking agent according to the invention exhibits a satisfactory taste without any bitterness whatsoever.

The digestibility should be zero for an ideal bulking agent. However, the digestibilities of the known bulking agents Neosugar and Polydextrose are not zero either. As appears from the following comparative digestibility experiments with glucose, Polydextrose, and the bulking agent according to the invention, prepared as described in Example 1, the digestibility of the bulking agent according to the invention is comparable to the digestibility of the prior art bulking agent Polydextrose. The conditions and the results in relation to the digestibility experiments with rats in groups each comprising five rats appear from the following description and tables.

The control diet consisted of the following ingredients in the indicated ratios :

| Corn starch | 68,4% |
|---|---|
| casein + methionin | 15,0% |
| corn oil | 7,0% |
| cellulose | 4,0% |
| vitamins | 1,6% |
| minerals | 4,0% |

Four other diets were prepared by withdrawal of an amount of corn starch corresponding to 10% by weight of the entire control diet and substituting an equal amount of the bulking agent according to the invention, Neosugar, Polydextrose, and sucrose.

Groups comprising five rats in each group were fed with these diets, and the digestible dry matter was measured after a preliminary period of 10 days by differential gravimetric determination.

The results appear from the following table.

| Diet with | Rat no. | Digestible dry matter (%) |
|---|---|---|
| Bulking agent according to the invention | 1 | 92.5 |
| | 2 | 92.9 |
| | 3 | 91.9 |
| | 4 | 92.7 |
| | 5 | 92.0 |
| | x̄ | 92.4 |
| Polydextrose | 6 | 89.7 |
| | 7 | 90.4 |
| | 8 | 93.7 |
| | 9 | 93.6 |
| | 10 | 91.4 |
| | x̄ | 91.8 |
| Neosugar | 11 | 94.7 |
| | 12 | 92.8 |
| | 13 | 93.1 |
| | 14 | 92.0 |
| | 15 | 92.6 |
| | x̄ | 93.0 |
| Beet sugar | 16 | 93.2 |
| | 17 | 94.3 |
| | 18 | 94.2 |
| | 19 | 94.4 |
| | 20 | 94.3 |
| | x̄ | 94.1 |
| Control diet | 21 | 94.6 |
| | 22 | 94.7 |
| | 23 | 94.7 |
| | 24 | 94.5 |
| | 25 | 94.5 |
| | x̄ | 94.4 |

The digestible dry matter, x%, of the bulking agents, assuming additivity of the values of digestible dry matter of the components in the diet, can thus be calculated, e.g. for the bulking agent according to the invention, by means of the equation :

$$0,9 \cdot 94.4 + 0,1 \cdot x = 92.4$$

$$x = 74\%$$

The digestible dry matter for the other bulking agents can be calculated similarly, vide the following table.

| Bulking agent | Digestible dry matter, % |
|---|---|
| Bulking agent according to the invention | 74 |
| Polydextrose | 68 |
| Neosugar | 80 |

Later, after the following 6 weeks the weight increase was measured. The results appear from the following table.

| | Bulking agent acc. to the inv. | Poly-dex-trose | Neo-sugar | Sucrose | Control |
|---|---|---|---|---|---|
| Average weight increase, g | 206.91 | 214.66 | 206.83 | 220.11 | 215.59 |
| Standard deviation | 10.68 | 21.72 | 6.24 | 8.54 | 14.33 |
| SEM (Standard deviation esti-mate of means) | 4.77 | 9.71 | 2.79 | 3.82 | 6.41 |

The percentual weight difference, y%, of the bulking agent, taking the sucrose as a control with an assumed digestibility of 100%, thus can be calculated according to the equation :

$$y = \frac{220.11 - 206.91}{220.11} \times 100\% = 5.9\%$$

As the bulking agent is only 10% of the diet, the digestibility, x%, can be calculated according to the equation :

$$x = (10 - 5.9) \times 10 = 41\%$$

The digestibility of Polydextose and Neosugar can be calculated in a similar manner. In the following table the calculated digestibilities of the bulking agents are shown.

| Bulking agent | Digestibility, % |
|---|---|
| Bulking agent according to the invention | 41 |
| Polydextrose | 75 |
| Neosugar | 40 |

From the above figures it appears that the digestibility of the bulking agent according to the invention is as low as or lower than the digestibility of the bulking agents belonging to the prior art, and thus that the bulking agent according to the invention can be classified as a low calorie nutrient.

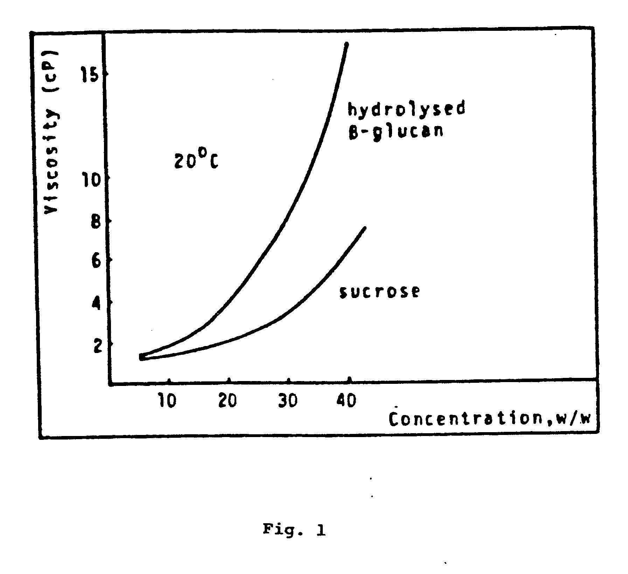

The viscosity increasing capacity should be high for an ideal bulking agent. Comparative experiments carried out with sucrose and the bulking agent according to the invention prepared as described in Example 1 shown that on a g-to-g basis the bulking agent according to the invention exhibits a higher viscosity increasing capacity than sucrose. Reference is made to fig. 1.

The invention will be described in the following Examples 1 to 3, whereby Example 1 is a preparation example, and Example 2 and 3 are use examples.

Example 1

Reference is made to the following flow sheet which illustrates the single steps of the process.

```
┌─────────────────────┐          ┌─────────────────────┐
│    Grinding of      │          │   Hydrolysis with   │
│      barley         │          │    beta-glucanase   │
└─────────────────────┘          └─────────────────────┘
         │                                │
         ▼                                ▼
┌─────────────────────┐          ┌─────────────────────┐
│ Standard liquefaction│         │                     │
│ and saccharification │         │    Inactivation     │
│ with TERMAMYL(TM) and│         │     of enzyme       │
│ amyloglucosidase    │          │                     │
└─────────────────────┘          └─────────────────────┘
         │                                │
         ▼                                ▼
┌─────────────────────┐          ┌─────────────────────┐
│    Inactivation     │          │ Carbon purification │
│     of enzyme       │          │  and ion exchange   │
└─────────────────────┘          └─────────────────────┘
         │                                │
         ▼                                ▼
┌─────────────────────┐          ┌─────────────────────┐
│       Hot           │          │                     │
│   centrifugation    │          │     Evaporation     │
└─────────────────────┘          └─────────────────────┘
         │                                │
         ▼                                ▼
┌─────────────────────┐          ┌─────────────────────┐
│     Membrane        │          │       Spray         │
│    filtration       │          │      drying         │
└─────────────────────┘          └─────────────────────┘
         │
         ▼
```

300 kg of Nordahl barley (delivered by Nielsen og Smith A/s, Denmark) were ground in a pin mill. The thus treated barley was transferred to 1,200 l of boiling water (boiling in order to inactivate the barley beta-glucanase). pH was adjusted to 6.0 and 0.55 kg of $CaCl_2 \cdot 2H_2O$ was added (100 ppm). Then 1.2 kg of TERMAMYL 60 L amylase is added (0.4% on a dry basis). The mixture is boiled for 30 minutes, and the mixture is left for two hours at 95°C. Then the temperature is lowered to 60°C, pH is adjusted to 4.5, and 0.6 kg of AMG 200 L amyloglucosidase is added. Hydrolysis time is 20 hours. Then the enzymes are inactivated by boiling for 20 minutes. Then the mixture is centrifuged at 75°C by means of a Westphalia SC 35 centrifuge. The centrifugate (ab. 80%) exhibited a dry matter content of about 40%. The centrifugate was ultrafiltered on a membrane filtration apparatus in pilot plant (membrane area 4 m², GR 60 P membrane), while the dry matter content of the permeate was less than 0.2% (measured as Brix). The temperature was 55°C, and the ultrafiltration lasted for about 48 hours with accompanying wash of the module during ultrafiltration. The dry matter content in the concentrate was 11.6 kg (150 l with 7.7% dry matter) corresponding to a yield of 4%, calculated on the basis of the original amount of barley. The pH value of the retentate was adjusted to 5.0, and 0.58 kg of FINIZYM 200 L beta-glucanase was added, whereafter hydrolysis was carried out for 24 hours at 50°C. The enzyme was inactivated by direct steam injection in the tank, corresponding to a temperature of 90°C for 20 minutes. The product was carbon purified twice. The first time 1.2 kg of carbon and 0.5 kg of Hiflo Supercell filter aid are added to the 150 l of reaction mixture, and the second time 1.4 kg of carbon and 1 kg of Hiflo Supercell filter aid are added to the reaction mixture. The reaction mixture is evaporated to a final volume of 50 l, and then a freeze drying and a grinding are carried out. The yield was 5.6 kg of bulking agent, corresponding to 2% calculated on the basis of the original amount of barley. By means of HPLC the following composition of the bulking agent was found ; $DP_5^+$ = 12.8%, $DP_4$ = 25.4%, $DP_3$ = 54.9%, $DP_2$ = 6%, and $DP_1$ = 0.9%.

By means of NMR analysis the constitution of the trisaccharide (DP = 3) is determined as O-beta-D-glucopyranosyl-(1,3)-O-beta-D-glucopyranosyl-(1,4)-D-glucose, and also, the constitution of the tetrasaccharide (DP = 4) is determined as

| | |
|---|---|
| about 80% of | O-beta-D-glucopyranosyl-(1,4)-O-beta-D-glucopyranosyl-(1,3)-O-beta-D-glucopyranosyl-(1,4)-D-glucose |
| | and |
| about 20% of | O-beta-D-glucopyranosyl-(1,3)-O-beta-D-glucopyranosyl-(1,4)-O-beta-D-glucopyranosyl-(1,4)-D-glucose. |

## EXAMPLE 2

A control sugar cookie mix was prepared by mixing 50 g of margarine, 75 g of sucrose, 1/2 egg, 62 g of four, 1 g of NaCl, 1/2 teaspoonful of vanilla sugar, and 40 g of pure household chocolate. A sugar cookie mix with the bulking agent according to the invention, prepared as described in Example 1, was prepared as the control sugar cookie mix, only the 75 g of sucrose were substituted by 75 g of the bulking agent according to the invention and 0.5 g of Aspartame. Both mixes were shaped to usual sugar cookies and baked for 12 minutes at 185°C. According to a trained panel consisting of ten persons the low calorie sugar cookies with the bulking agent according to the invention had an excellent taste completely matching the taste of the control sugar cookies.

## EXAMPLE 3

Two samples of marzipan were made up as follows

I (Control)

47.5 g of deskinned, chopped almonds
12.5 g of sugar
2 teaspoons of water (Ca 10 ml)
1 teaspoon of albumin (Ca 5 ml)

II (according to the invention)

47.5 g of deskinned, chopped almonds
12.5 g of bulking agent according to the invention
0.07 g of Aspartame
2 teaspoons of water (Ca 10 ml)
1 teaspoon of albumin (Ca 5 ml)

When evaluated by a trained panel consisting of 10 persons it turned out that as an average around half of the members of the panel preferred the marzipan according to the invention, and around half of the members of the panel preferred the control marzipan.

## Claims

1. The use in food as a substitute for sucrose and other soluble simple carbohydrates in food of a low calorie bulking agent, the active component of which bulking agent is a glucose oligomer or a mixture of glucose oligomers, in which DP = 3 or 4, and in which the or each oligomer exhibits one beta-1,3-glucosidic bond, all other bonds being beta-1,4-glucosidic bonds.

2. Use of the bulking agent according to Claim 1 in a nutrient or a stimulant, as a substitute for sucrose or other simple, soluble carbohydrates.

3. Use according to Claim 2, wherein the nutrient or the stimulant is a salad dressing, a marmalade, a carbonated drink, an ice cream, or a cookie.

4. Nutrient or stimulant containing a bulking agent, wherein the bulking agent is the bulking agent used in Claim 1.

5. Nutrient or stimulant according to Claim 4, wherein the nutrient or stimulant contains 1-50% by weight, preferably 5-25% by weight of the bulking agent, calculated on the weight of the nutrient or stimulant.

6. Use of a substance or composition, the active component of which is a glucose oligomer or a mixture of glucose oligomers, in which DP = 3 or 4, and in which the or each oligomer exhibits one beta-1,3-glucosidic bond, all other bonds being beta-1,4-glucosidic bonds, for the manufacture of a low calorie bulking agent for use in food as a substitute for sucrose or other simple soluble carbohydrates.

## Ansprüche

1. Verwendung eines körpergebenden Produktes mit verringertem Nährwert in Lebensmitteln als ein Ersatzstoff für Saccharose und andere lösliche einfache Kohlehydrate in Lebensmitteln, wobei die wirksame Komponente des körpergebenden Produktes ein Glucoseoligomer oder ein Gemisch von Glucoseoligomeren ist, wobei DP = 3 oder 4 ist und das oder jedes Oligomer eine β-1,3-glucosidische Bindung aufweist, während alle anderen Bindungen β-1,4-glucosidische Bindungen sind.

2. Verwendung des körpergebenden Produktes nach Anspruch 1 in einem Nahrungsmittel oder einem Stimulans als ein Ersatzstoff für Saccharose oder andere einfach, lösliche Kohlehydrate.

3. Verwendung nach Anspruch 2, dadurch gekennzeichnet, daß das Nahrungsmittel oder das Stimulans ein Salatdressing, eine Marmelade, ein kohlensäurehaltiges Getränk, eine Eiskrem oder ein Keks ist.

4. Nahrungsmittel oder Stimulans, das ein körpergebendes Produkt enthält, wobei das körpergebende Produkt das in Anspruch 1 verwendete körpergebende Produkt ist.

5. Nahrungsmittel oder Stimulans nach Anspruch 4, dadurch gekennzeichnet, daß das Nahrungsmittel oder Stimulans 1-50 Gew.-%, vorzugsweise 5-25 Gew.-% des körpergebenden Produktes enthält, berechnet auf dem Gewicht des Nahrungsmittels oder Stimulans.

6. Verwendung einer Substanz oder einer Zusammensetzung, deren wirksame Komponente ein Glucoseoligomer oder ein Gemisch von Glucoseoligomeren ist, wobei DP = 3 oder 4 ist und das oder jedes Oligomer eine β-1,3-glucosidische Bindung aufweist, während alle anderen Bindungen β-1,4-glucosidische Bindungen sind, für die Herstellung eines körpergebenden Produktes mit verringertem Nährwert zur Verwendung in Lebensmitteln als ein Ersatzstoff für Saccharose oder andere einfache lösliche Kohlehydrate.

## Revendications

1. L'utilisation dans un aliment, comme agent de remplacement du saccharose et des autres glucides simples solubles dans l'aliment, d'un agent de lest hypocalorique, le composant actif de cet agent de lest étant un oligomère du glucose ou un mélange d'oligomères du glucose, dans lequel DP = 3 ou 4, et dans lequel le ou chaque oligomère présente une liaison β-1,3-glucosidique, toutes les autres liaisons étant des liaisons β-1,4-glucosidiques.

2. Utilisation de l'agent de lest de la revendication 1 dans un aliment ou un stimulant pour remplacer le saccharose ou d'autres glucides solubles simples.

3. Utilisation selon la revendication 2, dans laquelle l'aliment ou le stimulant est une sauce pour salade, une confiture, une boisson gazeuse, une crème glacée ou un biscuit.

4. Aliment ou stimulant contenant un agent de lest, dans lequel l'agent de lest est l'agent de lest utilisé dans la revendication 1.

5. Aliment ou stimulant selon la revendication 4, dans lequel l'aliment ou le stimulant contient 1 à 50% en poids, de préférence 5 à 25% en poids, de l'agent de lest, calculés relativement au poids de l'aliment ou du stimulant.

6. Utilisation d'une substance ou composition dont le composant actif est un oligomère du glucose ou un mélange d'oligomères du glucose, dans lequel DP = 3 ou 4 et dans lequel le ou chaque oligomère présente une liaison β-1,3-glucosidique, toutes les autres liaisons étant des liaisons β-1,4-glucosidiques, pour la préparation d'un agent de lest hypocalorique pour l'emploi dans un aliment pour remplacer le saccharose ou d'autres glucides solubles simples.

Fig. 1